Europäisches Patentamt

European Patent Office

Office européen des brevets

(11) Publication number : **0 486 738 B1**

# (12) EUROPEAN PATENT SPECIFICATION

(45) Date of publication of patent specification :
06.07.94 Bulletin 94/27

(51) Int. Cl.⁵ : **A23C 9/13**

(21) Application number : **90312757.9**

(22) Date of filing : **23.11.90**

(54) Method of preparing milk-fermented food.

(43) Date of publication of application :
27.05.92 Bulletin 92/22

(45) Publication of the grant of the patent :
06.07.94 Bulletin 94/27

(84) Designated Contracting States :
**DE FR GB IT NL**

(56) References cited :
**EP-A- 0 154 614**
**DE-A- 1 952 361**
**JOURNAL OF FOOD SCIENCE, vol. 45, no. 3,**
**1980, pages 471-475; R.H. SCHMIDT et al.:**
**"Heat treatment and storage effects on text-**
**ure characteristics of milk and yogurt systems**
**fortified with oilseed proteins"**
**JOURNAL OF AMERICAN OIL CHEM. SOC.,**
**vol. 56, no. 3, 1979, pages 389-391; C.W. KO-**
**LAR et al.: "Vegetable protein application in**
**yoghurt, coffee creamers and whip toppings"**
**FOOD SCIENCE & TECHNOLOGY AB-**
**STRACTS, no. 84-09-H1793, 1983, pages**
**325-335; J. ROSSI: "Fermented beverages**
**obtained from unconventional substrates", &**
**SCIENZA E TECHNICA LATTIERO-CASEARIA**
**34(5)**

(56) References cited :
**MILCHWISSENSCHAFT, vol. 44, no. 5, 1989,**
**page 324; A.A. EL-NESHAWY et al.: "Qualität**
**von Zabadi aus mit Molken- und Sojaprotein**
**angereicherter Kuhmilch"**
**DERWENT FILE SUPPLIER WPI/WPIL,**
**AN=77-06532Y [04], Derwent Publications Ltd,**
**London, GB; & JP-A-51 142 566 (MOCHIZUK I)**

(73) Proprietor : **KABUSHIKI KAISHA YAKULT HONSHA**
**1-19, Higashishinbashi 1-chome**
**Minato-ku Tokyo 105 (JP)**

(72) Inventor : **Yajima, Masako, c/o Kabushiki Kaisha Yakult Honsha**
**1-19, Higashi Shinbashi 1-chome**
**Minato-ku, Tokyo (JP)**
Inventor : **Hashimoto, Shinji, c/o Kabushiki K. Yakult Honsha**
**1-19, Higashi Shinbashi 1-chome**
**Minato-ku, Tokyo (JP)**
Inventor : **Saita, Taketsugu, c/o Kabushiki K. Yakult Honsha**
**1-19, Higashi Shinbashi 1-chome**
**Minato-ku, Tokyo (JP)**
Inventor : **Matsuzaki, Kunio, c/o Kabushiki K. Yakult Honsha**
**1-19, Higashi Shinbashi 1-chome**
**Minato-ku, Tokyo (JP)**

(74) Representative : **Ablewhite, Alan James et al**
**MARKS & CLERK,**
**57/60 Lincoln's Inn Fields**
**London WC2A 3LS (GB)**

EP 0 486 738 B1

## Description

FIELD OF INVENTION

The present invention relates to a method of producing milk-fermented food, and more particularly, to a method of producing milk-fermented food by fermenting milk with bifidobacterium, and also to milk-fermented food containing bifidobacteria.

"Milk" herein means whole milk or skimmed milk obtained from cows, goats or similar milk-producing animals; reconstituted milk prepared from powdered milk made from naturally obtained milk, or a mixture of all of the kinds of milk mentioned above. "Fermented food" includes beverages such as lactic acid bacteria beverages and those beverages processed by heating and sterilization after fermentation. "Acidity" means volume (ml) of 0. 1N-NaOH per ml to neutralize 10 ml of sample.

DESCRIPTION OF PRIOR ART

Bifidobacterium is one of the most dominant bacterial flora in the intestine of infants and most healthy adults and seems to contribute to the maintenance of a normal flora in the intestine. It has been reported that the administration of these live bacteria to humans or domestic animals suffering from diarrhoea, or patients infected with superinfection, remarkably improves their symptoms. Accordingly, yoghurt, milk beverages and sweets which contain live Bifidobacteria have been developed and also have been commercially available for use in improving health by allowing a regular ingestion of such bifidobacteria.

Bifidobacteria are, however, originally anaerobic and are thus readily affected by oxygen and easily destroyed in a milk-fermented product with high acidity. Lactic acid bacteria have a tendency to die out, but not as readily as bifidobacteria, when pH falls during ferementation.

In milk-fermented food products, it is necessary to maintain the numbers of viable cells at a high level for at least two or more weeks. Bifidobacteria and lactic acid bacteria however, will die out because they generate organic acids and thus decrease the pH. Such qualities limit their acidity to a low level in the milk-fermented food obtained by use of the bacteria. Also, it is difficult to maintain high levels of viable cell count of the product for long periods even under moderately suppressed acidic conditions. Therefore, an improved taste cannot be pursued by decreasing the pH of the food. High numbers of viable cells are also difficult to maintain for long periods when the acidity is suppressed in milk-fermented food.

In addition, bifidobacteria require certain growth promoters to obtain sufficient growth in pure milk-media. Conventionally, growth promoters such as yeast extract, sulphur containing amino acids (for example, cysteine, methionine and the like), soybean peptide (refer to Monthly Food Chemical, 8, 64, 1988) and so on have been used. In many cases these substances cannot be used in sufficient amounts because of their own characteristic taste.

The growth accelerating effect of soybean milk is disclosed in Japanese Patent Publication No. 45-9822. Soybean milk however, has its own peculiar smell and changes for the worse in taste are unavoidable when sufficient amounts of soybean milk are used. In Japanese Patent Publication No 51-142566 or method is described according to which Bifidobacteria are used in the fermentation of cow milk whereby a soybean koji extract is added.

A method is disclosed in Japanese Patent Publication No. 59-179064, wherein soybean milk was neutralized by calcium hydroxide in the presence of calcium dichloride, after the removal of its protein by the addition of phosphoric acid or phosphoric acid salts, and then it was precipitated by heating and desalting, thereby condensing the fraction of growth promoting substance for bifidobacteria contained in the soybean milk. The fraction of the growth promoting substance for bifidobacteria thus obtained was composed of 7.2% crude protein, 77.3% carbohydrate and 15.5% crude ash. The carbohydrate fraction was composed of 51.9% sucrose, 27.0% stachyose and 11.2% raffinose. It has been also reported that a highly activated growth promoting substance for bifidobacteria was obtained by purifying this fraction with the use of a membrane separation method. The resulting substance was composed of 12.3% raffinose, 84.5% stachyose and 3.2% verbacose (Japanese Patent Publication No. 60-66978). Japanese Patent Publication No. 62-155082 discloses a growth promoting substance for bifidobacteria which was directly extracted from defatted soybean meal by using a 20 to 60 w/v% of alcoholic solution. The main component of the accelerator was an oligosaccharide which was composed of 82.5% to 85.1% carbohydrates, 6.9% to 7.5% protein, 1.0% to 2.8% lipid and 6.3% to 6.4% ash. Such bifidobacterial accelerators mainly made up of oligosaccharides are so difficult to digest that they go down to a lower area of the intestines, thereby effectively stimulating the growth of bifidobacterium in an entero carbon source-deficient environment. These oligosaccharides are, however, not as effective for stimulating the growth of bifidobacteria in a culturing process of producing milk-fermented food because of the simultaneous presence of other readily available saccharides, for example lactose, glucose etc.

Various attempts have recently been made to shorten the fermenting period when employing a lactic acid bacterium. The preparation of yoghurt from milk fortified with oilseed proteins, in particular soy protein isolate, before fermentation by lactic acid bacteria, is reported (see Journal of Food Science, vol. 45, 1980, pp. 471-475, and Journal of Amer. Oil. Chem. Soc. , vol. 56, 1979, pp. 389-391).

## SUMMARY OF THE INVENTION

In view of the foregoing, an object of the present invention is to eliminate the above disadvantages in the production of milk-fermented food.

More specifically, an object of the present invention is to provide a better method for producing milk-fermented food, wherein the fermenting period for producing the milk-fermented food, which is fermented by bifidobacteria, is shortened to increase the numbers of live bacteria in the product, increasing their survival rate and maintaining their numbers for a long period, thereby providing milk-fermented food with a fresh flavour based on high acidity.

Another object of the present invention is to provide a milk-fermented food manufactured by the above method wherein the survival rate of the bifidobacteria is improved so as to maintain the numbers of viable bacteria.

According to a first aspect of the present invention, there is provided a method comprising adding an isolated soybean protein to a culture medium composed mainly of milk in a milk-fermented food producing method, wherein bifidobacteria are inoculated into and cultured in the culture medium.

According to a second aspect of the present invention, there is provided a method comprising adding an isolated soybean protein and yeast extract to a culture medium composed mainly of milk, in a milk-fermented food producing method, wherein bifidobacteria are inoculated into the culture medium and cultured.

According to a third aspect of the present invention, there is provided a method comprising adding an isolated soybean protein to a milk-fermented culture obtained from a cultivation of bifidobacteria, in a milk-fermented food producing method, wherein such bifidobacteria are inoculated into and cultured in the culture medium composed mainly of milk.

## BRIEF DESCRIPTION OF THE DRAWINGS

Fig. 1 is an illustration of a graph showing results of Experiment 1; and
Fig. 2 is an illustration of a graph showing the time course of numbers of viable bacteria in products during storage at 10°C, respectively as in Examples 4 to 13 and Comparative Examples 1 to 3.

## DETAILED DESCRIPTION OF THE INVENTION

The present invention is illustrated hereunder in more detail. The method of the present invention can be performed in a conventional manner. The species of bacteria, milk culture medium and fermenting conditions chosen will depend upon the kind of milk-fermented food to be produced, it being essential, however, that bifidobacteria are inoculated into and cultured in the culture medium composed mainly of milk also comprising isolated soybean protein.

The isolated soybean protein in this invention is commercially available. In the alternative, it may be prepared, for example, by the neutralization and drying of soybean protein gathered after precipitation of protein from soybean milk. Precipitation of protein is suitably enabled by adding an acid to soybean milk obtained from defatted soybean by extraction with water.

The isolated soybean protein may be added in any appropriate form or manner to a milk culture medium for culturing the above-mentioned bacteria. It is, however, preferable to dissolve the soybean protein in water together with a culture medium composed mainly of milk, for example, culture medium materials such as powdered milk, and to heat-sterilize the resulting mixture.

The amount of isolated soybean protein added to the culture medium composed mainly of milk is preferably in the range of about 0.1 w/v% to 7.0 w/v%, and more suitably about 0.1 w/v% to 5.0 w/v%. Using larger amounts of soybean protein will not improve the growth accelerating effect significantly, but will, on the other hand, result in a characteristic soybean odour in certain kinds of product. Addition of amounts of the soybean protein greater than those mentioned above has no particular value except when trying to regulate a nutritive balance with the soybean protein.

The growth of the bacteria proceeds remarkably fast and generation of acids is also accelerated by addition of the isolated soybean protein. Cultivation time to reach a pre-determined pH is thereby greatly reduced.

Furthermore, the amount of organic acids generated, such as acetic acid, lactic acid and the like, which are metabolites generated during the growth of bifidobacteria, increases when the isolated soybean protein is added to the cultured medium. The original acid and base buffering action by the isolated soybean protein itself, however, prevents the pH from falling too severely, so that the resultant pH of the culture with isolated soybean protein is not so low but the acidity thereof is higher than a similar culture without the isolated soybean protein. Such an effect may provide a milk-fermented food with high acidity but without decreasing the survival rate of the bacteria used in the fermentation.

Other appropriate growth accelerators may be used together with an isolated soybean protein, so long as they do not have a deleterious effect on the excellent characteristics of the soybean protein. Thus, for example, a yeast extract may be added to the medium in small amounts without adversely effecting the flavour of the food. Bacterial growth is highly accelerated when the isolated protein and yeast extract are added together to the medium. The amount of the yeast extract added to the milk culture medium is preferably in the range of about 0.01 w/v% to 0.1 w/v%.

In a further aspect of the method of the present invention, the isolated soybean protein may be added to the bacterial culture after discontinuation of cultivation, e.g. when the acidity of the inoculate has reached a pre-determined level. Protein may then be added to the medium during processes such as homogenisation, mixing with other milk-fermented substances, and addition of sweetenings, seasonings or spices to the inoculate and dilution of the same dependent on the final product desired.

Addition of the isolated soybean protein to the bacterial culture after cultivation can increase the survival rate of the bacteria in milk-fermented food fermented with bifidobacterium, and also can produce products having a fresh tasty flavour.

When addition of the soybean protein is after cultivation, the amount of isolated soybean protein used is suitably about 0.1 w/v% to 1.5 w/v%, and is preferably about 0.1 w/v% to 1.0 w/v%. Addition of amounts of soybean protein greater than those specified will not improved the bacterial survival rate significantly, but will result in a product with a characteristic soybean odour.

The product may be packed after processes such as homogenization, mixing with other milk-fermented substances, addition of sweetenings, seasonings or spices, dilution of the inoculate and sterilization by heating dependent on the desired final product.

It is apparent from the foregoing that the method disclosed in this invention can shorten the time needed to produce milk-fermented food fermented with bifidobacteria, and can also improve the viable numbers of live bifidobacteria, thereby enabling the survival rate to increase. Since the pH level of the bacterial culture of the present invention is higher than that of conventional cultures, i.e. those with no added isolated soybean protein, but the acidity is the same, the pH at the completion of cultivation may be set at a high level without worrying about the taste becoming unsavoury due to insufficient acidity. The survival rate of bifidobacteria is thereby improved and a tasty milk-fermented food which maintains relatively higher numbers of living bacteria for long periods is provided.

The isolated soybean protein employed in the present invention does not have as strong a soybean odour as soybean milk, and the weak soybean odour is sufficiently removed during fermentation. It also has none of the bitter taste peculiar to peptides. Thus amounts of soybean protein sufficient to create excellent effects and also to contribute to an improvement in the nutritive balance of the milk-fermented food can be used without fear of adversely effecting taste.

## EXAMPLES

The method of the present invention is illustrated with reference to the following non-limiting examples.

The isolated soybean protein employed in each example was Fujipro CL made by Fujiseiyu Co., Ltd.

## Experiment 1

Bifidobacterium breve YIT4010 was inoculated into a milk culture medium (10 w/v% skim milk powder, 0.03 w/v% yeast extract) which was prepared anaerobically under flushing nitrogen gas, and cultured at 37°C overnight. The culture solution thus obtained was specified as a starter.

3.2 w/v% isolated soybean protein and/or 0.05w/v% yeast extract was added to a basic milk culture medium (5 w/v% whole milk powder, 12 w/v% skim milk powder). The culture medium thus obtained was inoculated with 1v/v% starter and cultured at 34°C. During cultivation, pH in the culture was measured, and the growth of the bifidobacteria was compared with pH as an indication.

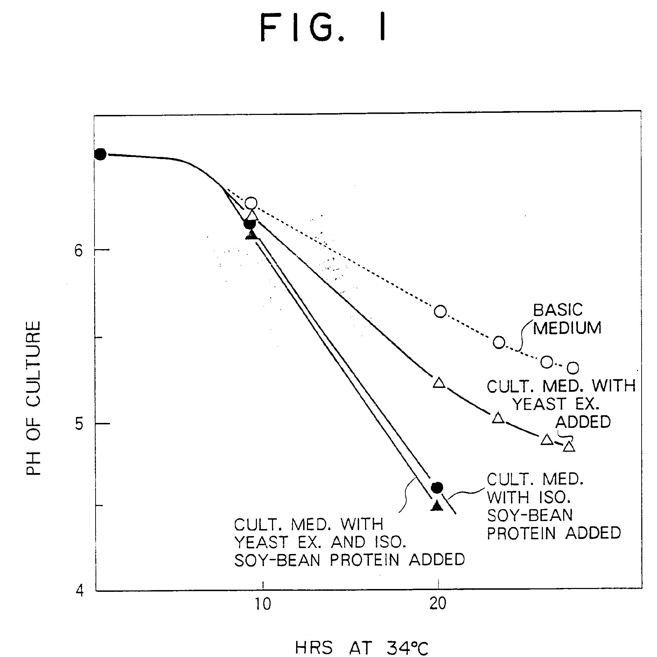

The results are illustrated in Fig. 1. Further, none of the culture were found to have any deterioration of flavour.

As will be clear from Fig. 1, the growth rate of bifidobacteria was remarkably promoted by addition of the isolated soybean protein and was further promoted by the simultaneous use of the yeast extract. It is impossible to compare the growth accelerating effect of the isolated soybean protein with that of the yeast extract at the substance level since the adding concentration of these two solutions are different.

However, if further yeast extract is added to the culture medium, the flavour is spoiled, and it is therefore clear that the isolated soybean protein is superior in achievable growth promoting effect without adversely affecting flavor.

## EXPERIMENT 2

The starters were prepared by using Bifidobacterium breve YIT4010 (I), Bifidobacterium bifidum YIT4007(II), Bifidobacterium bifidum E319(III), Bifidobacterium longum YIT4035(IV) and Bifidobacterium longum ATCC15707(V), respectively in a similar manner as in experiment 1.

The basic culture medium used in this experiment was composed of 13 w/v% whole milk powder. This basic culture was employed as a control culture. Another culture medium with a growth promoting substance added was prepared by the addition of 0.2 w/v% or 1.0 w/v% isolated soybean protein and 0.03 w/v% yeast extract. The culture media thus obtained were inoculated with 2 v/v% bifidobacteria starters, respectively and were cultured at 37°C for 16 hours. The growth in the culture media were compared using the pH of the culture solution as an indication. The results are illustrated in Table 1.

Table 1. pH of culture solution after 16hours of cultivation at 37°C

| Growth accelerating substance (%) | | Bifidobacterium | | | | |
|---|---|---|---|---|---|---|
| yeast extract | Isolated soybean protein | I | II | III | IV | V |
| 0 | 0 | 5.48 | 5.06 | 5.77 | 6.21 | 5.74 |
| 0.03 | 0 | 4.88 | 4.75 | 5.44 | 6.03 | 5.10 |
| 0 | 0.2 | 5.34 | 4.73 | 5.60 | 6.05 | 5.62 |
| 0.03 | 0.2 | 4.75 | 4.67 | 5.41 | 5.24 | 5.43 |
| 0 | 1.0 | 4.67 | 4.61 | 5.41 | 5.64 | 5.04 |
| 0.03 | 1.0 | 4.36 | 4.57 | 5.27 | 5.01 | 5.08 |

Four out of the five sample strains show more of less similar tendencies, but Bifidobacterium longum ATCC15707(V) shows a different tendency. Namely, bifidobacteria grew slowly in the basic culture but the growth of bifidobacteria was stimulated when the yeast extract or the isolated soybean protein was added thereto.

When the concentration of the isolated soybean protein was 0.2%, the growth rates of the bifidobacteria were the same or slightly inferior to those rates when the yeast extract alone was added thereto. When the isolated soybean protein concentration was 1%, the growth rate of the bifidobacteria showed better results than in the former case. The growth rates were further stimulated when both the isolated soybean protein and the yeast extract were added to the basic culture medium. Specifically, Bifidobacterium breve YIT4010(I) and Bifidobacterium longum YIT4035(IV) exhibited this tendency. Bifidobacterium longum ATCC15707(V) showed a sharp effect in growth rate when the yeast extract alone was added to the basic medium. Simultaneous addition of the isolated soybean protein to the medium did not stimulate the growth of the bifidobacteria. However, the growth thereof was still stimulated by the addition of the isolated soybean protein alone.

## Example 1

Culture media were prepared by adding an isolated soybean protein to a basic culture medium which contained 5 w/v% whole milk powder and 12 w/v% skim milk powder. The isolated soybean protein concentration of the medium attained 3.2 w/v% or 4.8 w/v%. A control culture medium was prepared by adding 0.03 w/v% yeast extract to the basic culture medium without adding the isolated soybean protein.

Culture media were inoculated with 1 v/v% of a starter of Bifidobacterium breve YIT4010(B.breve) stock prepared in a similar manner to Experiment 1, and were cultured at 37°C until the pH of the resulting culture solution reached 4.6 (the yeast extract was added to the control culture medium because bifidobacteria showed a slow growth rate in a culture medium having no growth accelerator, and also could not be fermented to attain a pH of 4.6 for comparing their survival rates at the same pH. The survival rate of bifidobacterium culture did not change for the worse as a result of the addition of the yeast extract).

3 volumes of the bifidobacterium culture solution thus obtained was mixed with 2.3 volumes of the basic culture medium. 0.55 w/v% pectin and 0.4 w/v% gelatin were added to the mixture, and water was added for preparing a total of 10 volumes of yoghurt-like milk-fermented food. This product was preserved at 10°C for 15 days, and the results of the change in the viable cell number of bifidobacteria are shown in Table 2.

### Table 2 . Decrease in viable cell number of B. breve by preservation

| Concentration of Isolated soybean protein in B.breve culture (w/v%) | viable cell number of B.breve | | Survival rate (%) |
|---|---|---|---|
| | Immediately after production | After 15 days | |
| 0 | $9.6 \times 10^8$ | $2.8 \times 10^7$ | 2.9 |
| 3.2 | $2.3 \times 10^9$ | $3.9 \times 10^8$ | 17.0 |
| 4.8 | $2.5 \times 10^9$ | $5.9 \times 10^8$ | 23.6 |

The food containing isolated soybean protein food had no soybean odour at all when 3.2 w/v% isolated soybean protein (1 w/v% of concentration in food product) was added. There was, however, an increase in acidic taste in the feeling of freshness, and an improvement in flavour. When the isolated soybean protein itself was dissolved in water, it had a soybean odour. However, this odour had been removed during fermentation due to the bifidobacterium. As the concentration of the isolated soybean protein increased, the soybean odour had generated gradually, but it had only a slight smell even when added at 4.8 w/v% (i.e. 1.5 w/v% of concentration in the food product).

## Example 3

A culture medium was prepared by adding an isolated soybean protein to a basic culture medium containing 16 w/v% skimmed milk powder and 0.05 w/v% yeast extract until the isolated soybean protein concentration of the medium reached 0.1 w/v% or 0.2 w/v%. A basic culture medium to which the isolated soybean protein was not added, was employed as a control medium. Both culture media were inoculated with 2 v/v% of a starter of Bifidobacterium breve YIT4010 prepared in a similar manner to Experiment 1, and were then cultivated at 34°C until the pH of each culture reached 4.55.

The above-mentioned basic culture medium was inoculated with 0.5 v/v% prepared in a similar manner to Experiment 1, and was cultured at 34°C until the pH of the culture solution reached 4.40.

1.5 volumes of a bifidobacterium culture solution obtained by the above-mentioned cultivation was mixed with 1.5 volumes of a lactic acid bacteria culture solution. Pectin was added to the mixture until the pectin concentration reached 0.3 w/v%, and then sucrose solution was added until the concentration of sucrose reached 6.0 w/v%. Lactic fermenting beverage was prepared by adding water to the resulting solution until the total amount of food product was 10 volumes.

The flavour of the product was good irrespective of the addition of the isolated soybean protein to the product. The result of the preservation test at 10°C is illustrated in Table 3.

Table 3. Decrease in numbers of live bacteria by preservation

| Concentration of Isolated soybean protein in B.breve culture (w/v%) | Viable cell number of B.breve | | Survival rate (%) |
|---|---|---|---|
| | Immediately after production | After 15 days | |
| 0 | $5.2 \times 10^8$ | $2.3 \times 10^7$ | 4.4 |
| 0.1 | $7.9 \times 10^8$ | $5.3 \times 10^7$ | 6.7 |
| 0.2 | $7.9 \times 10^8$ | $6.2 \times 10^7$ | 7.9 |

Example 4

A culture medium was prepared by adding an isolated soybean protein to a basic culture medium containing 13 w/v% whole milk powder and 0.03 w/v% yeast extract until the soybean protein concentration of the medium reached 0.5 w/v%. This culture medium was inoculated with 2 v/v% of a starter Bifidobacterium longum ATCC15707 stock prepared in a similar manner to Experiment 1, and was then cultivated at 34°C until the pH of the cultivation solution reached 4.65.

A culture medium containing 7.5 w/v% whole milk powder, 21 w/v% skim milk and 0.1 w/v% yeast extract was inoculated with 0.5 v/v% of a starter of Streptococcus thermophilus prepared in a similar manner to Experiment 1, and was cultured at 37°C until the pH of the culture solution reached 4.50.

1.5 volumes of the bifidobacterium culture solution, obtained by the above-mentioned cultivation, was mixed with 3.0 volumes of a lactic acid bacteria culture solution. Pectin was added to the mixture until the pectin concentration reached 0.3 w/v%, and then sucrose solution was added until the degree of sweetness was 60. A yoghurt was prepared by adding water to the resulting solution until the total amount of food product was 10 volumes.

The resultant yoghurt had no soybean odour at all and had a fresh tasty flavour.

Example 5

A culture medium was prepared by adding an isolated soybean protein to a basic culture medium containing 13 w/v% whole milk powder and 0.03 w/v% yeast extract until the soybean protein concentration of the medium reached 0.5 w/v%. This culture medium was inoculated with 2 v/v% of a starter of Bifidobacterium infantis ATCC15697 stock prepared in a similar manner to Experiment 1, and was then cultivated at 34°C until the pH of the cultivation solution reached 4.65.

The cultured product may also be obtained by culturing Streptococcus thermophilus in a manner similar to Example 4.

1.5 volumes of a bifidobacterium culture solution obtained by the above-mentioned cultivation was mixed with 3.0 volumes of a lactic acid bacteria culture solution. Pectin was added to the mixture until the pectin concentration was 0.3 w/v%, and then sucrose solution was added until the degree of sweetness reached 60. A yoghurt was prepared by adding water to the resulting solution until the total amount of food product was 10 volumes.

The resultant yoghurt had no soybean odour at all and had a fresh tasty flavour.

Examples 6 to 9

An isolated soybean protein was added to a basic culture medium containing 13 w/v% whole milk powder and 0.03 w/v% yeast extract until the concentration of the isolated soybean protein reached 3.2 w/v%. This medium was cultured with 1 v/v% of a starter of Bifidobacterium breve prepared in a manner similar to Ex-

EP 0 486 738 B1

periment 1, and was then cultured at 34°C until the pH of the culture solution reached 4.65. Next, 0.5 v/v% of a starter of Streptococcus thermophilus, prepared in a similar manner to Experiment 1, was inoculated into a culture medium containing 7.5 w/v% whole milk powder, 21 w/v% skim milk powder and 0.1 w/v% yeast extract. This medium was then cultured at 37°C until the pH of the culture solution reached 4.50.

1.5 volumes of the Bifidobacterium breve culture solution thus obtained, was mixed with 3 volumes of the Streptococuss thermophilus culture solution. A yoghurt was prepared by adding pectin and syrup and water to the mixture until the total volume of the mixture was 10 volumes (Example 6).

Another yoghurt was prepared in a similar manner as described above except that an isolated soybean protein was not added to the Bifidobacterium breve culture medium (Example 7).

Furthermore, a yoghurt was prepared in a manner similar to Example 6 except that Streptococcus thermophilus was cultivated until the pH of the culture solution reached 4.35. (Example 8).

In addition, a yoghurt was prepared in a manner similar to Example 7 except that Streptococcus thermophilus was cultivated until the pH of the culture solution reached 4.35 (Example 9).

Table 4 shows characteristic values and a sensory evaluation of each product. On account of the use of the isolated soybean protein, we could produce a yoghurt having both higher acidity and higher pH value, thereby producing a yogurt haivng sourness, or suitable acidity without being dim.

### Table 4.

| Example No. | pH | Acidity | Sensory evaluation |
|---|---|---|---|
| 6 | 4.46 | 8.85 | Fresh and clean tasting |
| 7 | 4.47 | 8.04 | No punch and weak |
| 8 | 4.35 | 9.67 | Delicious, but sour |
| 9 | 4.34 | 8.95 | Ordinary taste |

Examples 10 to 12 and Comparative Examples 1 to 3

1 v/v% of a starter of Bifidobacterium breve YIT4010 prepared in a manner similar to Experiment 1 was inoculated into a milk culture medium (13 w/v% skim milk powder and 0.03 w/v% yeast extract), and was then cultured at 37°C until the pH of the culture medium reached 4.65.

After sterilization of a culture medium, comprising 7.5 w/v% whole milk powder and 21 w/v% skim milk powder, the medium was inoculated with a lactic acid bacteria (Streptococcus thermophilus), and was then cultivated at 37°C until the pH of the culture medium reached 4.35.

An isolated soybean protein to be added to the above-mentioned bacterial culture media was a 2.7 w/v% of solution which was sterilized at 121°C and then cooled to 5°C.

The incubates of the above bifidobacteria (hereinafter termed as B bacteria), the lactic acid bacteria (hereinafter termed as L bacteria) and the isolated soybean protein solution (hereinafter termed as SPI solution) were mixed together as shown in Table 5 (Examples 10 to 12 and Comparative Examples 1 to 3). A syrup was further added to the resulting mixture to give a total amount of 10 w/v% of the yoghurt-like milk-fermented food. The product was sealed and packed, and then preserved at not more than 10°C.

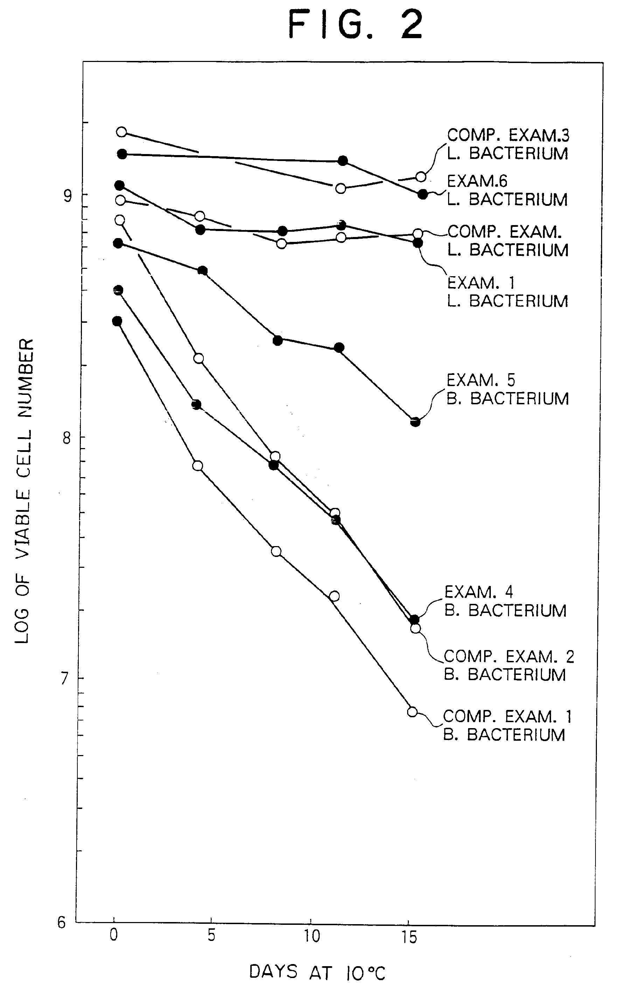

The results of the measurements of pH, acidity and change in the numbers of the viable bacteria in each product are shown in Table 6 and Fig. 2. It has been recognized that this table and figure show the improvements of buffering capacity of the product, and of survival rate of bacteria by the addition of the isolated soybean protein.

8

Table 5. Composition

| | B bacterium culture | L bacterium culture | SPI solution |
|---|---|---|---|
| Comparative example 1 | 1.5volume | 3 volume | |
| Example 10 | 1.5volume | 3 volume | 3.7volume |
| Comparative example 2 | 4.5volume | | |
| Example 11 | 4.5volume | | 3.7volume |
| Comparative example 3 | | 4.5 volume | |
| Example 12 | | 4.5 volume | 3.7 volume |

Table 6. pH and acidity

| | 0 day of production | | 15days after production | |
|---|---|---|---|---|
| | pH | Acidity | pH | Acidity |
| Comp. Exam. 1 | 4.34 | 9.20 | 4.34 | 9.57 |
| Example 10 | 4.49 | 9.50 | 4.34 | 10.87 |
| Comp.Exam.2 | 4.48 | 5.18 | 4.47 | 5.45 |
| Example 11 | 4.68 | 5.40 | 4.66 | 5.71 |
| Comp.Exam.3 | 4.32 | 11.26 | 4.31 | 11.63 |
| Example 12 | 4.44 | 11.46 | 4.38 | 12.12 |

When the flavour of the products was examined, there was a faint pleasant odour when isolated soybean protein was added but there was no unsavoury soybean odour such as a fishy smell or similar pungency.

Example 13 and Comparative Examples 4 and 5

1 w/v% of a starter of Bifidobacterium breve YIT4010 prepared in a similar manner to Example 1 was inoculated into a culture medium containing 13 w/v% whole milk powder and 0.05 w/v% yeast extract and cultured at 37°C until the pH of the culture reached 4.50 (hereinafter the culture thus obtained is termed as A).

0.5 w/v of a starter of Streptococcus thermophilus YIT2021, prepared in a manner similar to Example 1, was inoculated into a culture medium containing 7.5 w/v% whole milk powder, 21 w/v% skim milk powder milk and 0.1 w/v% yeast extract, and was then cultured at 37°C until the pH of the inoculate reached 4.50 (hereinafter the culture thus obtained is termed as B).

1.5 volumes of a culture A, 3.0 volumes of culture B and 3.7 volumes of isolated soybean protein solution (that was commercially available and was solubilized in water to become 2.68 w/v%, then was sterilized) were mixed together, and pectin and syrup were added to the mixture to give a total amount of 10 volumes of yoghurt (Example 13).

1.5 volumes of culture A, 3.0 volumes of culture B and 2.0 volumes of soybean milk (made of soybean in the conventional way and sterilized; 5% soybean protein content) were mixed together, and pectin and sterilized water were added to the mixture to give a total amount of 10 volumes of yoghurt (Comparative Example 4).

The content of soybean protein in Example 13 and Comparative Example 4 were both 1.0 w/v%.

Further, 1.5 volumes of culture A and 3.0 volumes of culture B were mixed together, and pectin, syrup and sterilised water were added to such mixture to give a total amount of 10 volumes of yoghurt without addition of soybean protein (Comparative Example 5). This yoghurt was subjected to a sensory test as a standard product.

The results of the sensory test on soybean odour (fishy smell) and taste were examined by 10 well trained panelists and are illustrated in Table 7. As can be seen from Table 7, this isolated soybean protein had almost no characteristic soybean odour or pungency. Evaluation standards were as follows:

1. <u>soybean odour</u>
- 0: none
- 1: slight
- 2: ordinary
- 3: fairly
- 4: high

2. <u>taste</u>
- +2: quite tasty
- +1: tasty
- 0: ordinary
- -1: unsavoury
- -2: quite unsavoury

In the product of Example 13, it was stated by the panelists that the taste of the product was enhanced by the very weak and slight soybean flavour.

Table 7

| | Soybean odor | | Taste | |
|---|---|---|---|---|
| | $\overline{\overline{X}}\pm D$ | Significant difference | $\overline{X}\pm D$ | Significant difference |
| Exam. 13 Isolated soybean protein added product | 0.8±0.23 | | 1.2±0.37 | |
| Comp. Exam. 4 soybean milk added product | 3.2±0.35 | * | -0.8±0.23 | * |
| Comp. Exam.5 Plain yogurt | 0.5±0.23 | | 1.4±0.35 | |

Table 7(*Significant difference when risk ratio is 5%)

**Claims**

1. A method for the production of a milk-fermented food which comprises addition of isolated soybean protein to a medium comprising milk and inoculated with bifidobacteria.

2. A method according to claim 1 wherein the isolated soybean protein is added to the medium prior to cultivation.

3. A method according to claim 1 wherein the isolated soybean protein is added to the cultivated meduim.

4. A method according to claim 1 or 2 which further comprises addition of yeast extract to the medium.

5. A method according to claim 4 wherein the yeast extract is added at 0.01 w/v% to 0.1 w/v%.

6. A method according to any one of the preceding claims wherein the soybean protein is added to the medium at 0.1 w/v% to 7.0 w/v%.

7. A method according to claim 6 wherein the soybean protein is added at 0.1 w/v% to 5.0 w/v%.

8. A method according to any one of the preceding claims wherein the bifidobacterium is Bifidobacterium breve, Bifidobacterium longum, Bifidobacterium bifidum, or Bifidobacterium infantis.

**Patentansprüche**

1. Verfahren zur Herstellung eines Sauermilch-Nahrungsmittels, umfassend die Zugabe von isoliertem Sojabohnenprotein zu einem Medium, das Milch umfaßt und mit Bifidobakterien beimpft wurde.

2. Verfahren gemäß Anspruch 1, dadurch **gekennzeichnet**, daß das isolierte Sojabohnenprotein zum Medium vor der Kultivierung zugesetzt wird.

3. Verfahren gemäß Anspruch 1, dadurch **gekennzeichnet**, daß das isolierte Sojabohnenprotein zum kultivierten Medium zugesetzt wird.

4. Verfahren gemäß Anspruch 1 oder 2, das außerdem die Zugabe von Hefeextrakt zum Medium umfaßt.

5. Verfahren gemäß Anspruch 4, dadurch **gekennzeichnet**, daß der Hefeextrakt in 0,01 G/V% bis 0,1 G/V% zugesetzt wird.

6. Verfahren gemäß einem der vorhergehenden Ansprüche, dadurch **gekennzeichnet**, daß das Sojabohnenprotein zum Medium in 0,1 G/V% bis 7,0 G/V% zugesetzt wird.

7. Verfahren gemäß Anspruch 6, dadurch **gekennzeichnet**, daß das Sojabohnenprotein in 0,1 G/V% bis 5,0 G/V% zugesetzt wird.

8. Verfahren gemäß einem der vorhergehenden Ansprüche, dadurch **gekennzeichnet**, daß das Bifidobakterium Bifidobakterium breve, Bifidobakterium longum, Bifidobakterium bifidum oder Bifidobakterium infantis ist.

**Revendications**

1. Un procédé pour la production d'un produit laitier fermenté, qui comprend l'addition de protéine de soja isolée à un milieu comprenant du lait et ensemencé avec des bifidobactéries.

2. Un procédé selon la revendication 1, dans lequel la protéine de soja isolée est ajoutée au milieu avant culture.

3. Un procédé selon la revendication 1, dans lequel la protéine de soja isolée est ajoutée au milieu cultivé.

4. Un procédé selon la revendication 1 ou 2, qui comprend de plus l'addition d'extrait de levure au milieu.

5. Un procédé selon la revendication 4, dans lequel l'extrait de levure est ajouté à raison de 0,01 % en poids/volume à 0,1 % en poids/volume.

6. Un procédé selon l'une quelconque des revendications précédentes, dans lequel la protéine de soja est ajoutée au milieu à raison de 0,1 % en poids/volume à 7,0 % en poids/volume.

7. Un procédé selon la revendication 6, dans lequel la protéine de soja est ajoutée à raison de 0,1 % en poids/volume à 5,0 % en poids/volume.

8. Un procédé selon l'une quelconque des revendications précédentes, dans lequel la bifidobactérie est *Bifidobacterium breve, Bifidobacterium longum, Bifidobacterium bifidum* ou *Bifidobacterium infantis.*

# F I G. I

# FIG. 2